# EUROPEAN PATENT APPLICATION

(11) **EP 4 525 405 A1**
(43) Date of publication of application: **19.03.2025**
(21) Application number: 23815080.9
(22) Date of filing: 25.05.2023
(51) Int. Cl.: H04L 65/60, H04L 69/14, H04L 45/24, H04L 65/40

(54) **DATA TRANSMISSION METHODS, SENDING SERVER, RECEIVING SERVER AND STORAGE MEDIUM**

(30) Priority: 01.06.2022 CN 202210615832
(71) Applicant: ZTE Corporation, Shenzhen, Guangdong 518057 (CN)
(72) Inventor: CHEN, Junjiang, Shenzhen, Guangdong 518057 (CN); TU, Yingzhe, Shenzhen, Guangdong 518057 (CN); ZHANG, Shengwen, Shenzhen, Guangdong 518057 (CN); CHEN, Yong, Shenzhen, Guangdong 518057 (CN); LU, Jian, Shenzhen, Guangdong 518057 (CN)
(74) Representative: Ziebig Hengelhaupt Intellectual Property Attorneys Patentanwaltskanzlei PartGmbB
(86) International application number: PCT/CN2023/096301
(87) International publication number: WO 2023/231897

(57) **Abstract**

The present application discloses data transmission methods, a sending server, a receiving server and a storage medium. The sending server communicates with the receiving server. The data transmission method applied to the sending server comprises: acquiring a code stream transmission request (S200); determining a first data volume of corresponding code stream data according to the code stream transmission request (S210); when the first data volume is greater than a target transmission threshold, determining a plurality of threads according to the first data volume (S220); and receiving the code stream data by means of the plurality of threads, and sending the code stream data to a receiving server (S230). The data transmission method applied to the receiving server comprises: receiving the code stream data from the sending server, and storing the code stream data (S800).

## Description

### CROSS-REFERENCE TO RELATED APPLICATIONS

The present application is based on and claims priority to Chinese Patent Application No. 202210615832.9, filed on June 01, 2022, the entire content of which is incorporated herein by reference.

### TECHNICAL FIELD

The present application relates to the field of audio and video data transmission, in particular to data transmission methods, a sending server, a receiving server and a storage medium.

### BACKGROUND OF THE INVENTION

With the arrival of the 5th-Generation Mobile Communication Technology (5G), the global audio and video industry has ushered in tremendous changes. The business volume of related products such as video conferencing, video Internet of Things, and video middle platforms is growing rapidly, resulting in the increasing demand for performance of storage devices and media. As an object-oriented distributed network storage scheme, object storage is more suitable for data sharing, faster in access and more flexible than block storage and file storage. In large-scale audio and video storage scenarios, an object storage system is faced with the need to process stream data with high concurrency and large traffic, and the transmission link performance of the object storage system has many bottlenecks. For example, the processing of data written to a mount point is slow, the instantaneous batch submission of files have a delay, and a network congests when calling a server side system function, resulting in packet loss, which will affect the quality of data transmission. At the same time, limited by the characteristics of a file system, the transmission performance of a single object storage system also has bottlenecks. Therefore, how to implement the object storage technology that can support high-performance stream data transmission is an urgent problem to be solved at present.

### SUMMARY OF THE INVENTION

Embodiments of the present application provide data transmission methods, a sending server, a receiving server and a storage medium.

In a first aspect, an embodiment of the present application provides a data transmission method, applied to a sending server. The sending server communicates with a receiving server. The method includes: acquiring a code stream transmission request; determining a first data volume of corresponding code stream data according to the code stream transmission request; in a case that the first data volume is greater than a target transmission threshold, determining a plurality of threads according to the first data volume; and receiving the code stream data by means of the plurality of threads, and sending the code stream data to the receiving server.

In a second aspect, an embodiment of the present application further provides a data transmission method, applied to a receiving server. The receiving server communicates with a sending server. The method includes: receiving code stream data from the sending server, and storing the code stream data, where the code stream data is received by means of a plurality of threads after the sending server determines, according to a code stream transmission request, that a corresponding data volume is greater than a target transmission threshold.

In a third aspect, an embodiment of the present application further provides a sending server, including: a memory, a processor, and a computer program that is stored on the memory and is capable of running on the processor, where the processor, when running the computer program, executes the data transmission method according to the first aspect above.

In a fourth aspect, an embodiment of the present application further provides a receiving server, including: a memory, a processor, and a computer program that is stored on the memory and is capable of running on the processor, where the processor, when running the computer program, executes the data transmission method according to the second aspect above.

In a fifth aspect, an embodiment of the present application further provides a computer readable storage medium, storing computer-executable instructions, where the computer-executable instructions are used to make a computer execute the data transmission method according to the first aspect and/or the second aspect above.

### BRIEF DESCRIPTION OF DRAWINGS

FIG. 1 is a schematic diagram of a system architecture platform configured to execute a data transmission method according to an embodiment of the present application;
FIG. 2 is a flow diagram of a data transmission method according to an embodiment of the present application;
FIG. 3 is a flow diagram of a data transmission method according to another embodiment of the present application;
FIG. 4 is a flow diagram of a data transmission method according to another embodiment of the present application;
FIG. 5 is a flow diagram of a data transmission method according to another embodiment of the present application;
FIG. 6 is a flow diagram of a data transmission method according to another embodiment of the present application;
FIG. 7 is a flow diagram of a data transmission method according to another embodiment of the present application;
FIG. 8 is a flow diagram of a data transmission method according to another embodiment of the present application;
FIG. 9 is a flow diagram of a data transmission method according to another embodiment of the present application;
FIG. 10 is a schematic structural diagram of a code stream data transmission model according to an embodiment of the present application; and
FIG. 11 is a flow diagram of a data transmission method according to another embodiment of the present application.

### DETAILED DESCRIPTION OF THE INVENTION

In order to make the objectives, technical solutions and advantages of the present application more clearly, the present application is further described in detail below with reference to the accompanying drawings and embodiments. It should be understood that the embodiments described herein are only illustrative of the present application and are not intended to limit the present application.

In the description of the present application, the meaning of several is one or more, the meaning of a plurality of is more than two, greater than, less than, more than, etc. are understood to exclude this number, and above, below, within, etc. are understood to include this number. If described, first and second are merely provided to distinguish technical features and are not to be construed as indicating or implying relative importance or implicitly indicating the number of technical features indicated or implicitly indicating the sequence of technical features indicated.

In the description of the present application, unless otherwise expressly limited, the words set, mount, connect, etc., shall be broadly understood, and those skilled in the art can reasonably determine the meaning of the above words in the present application based on the content of the technical solutions.

Currently, with the arrival of the 5th-Generation Mobile Communication Technology (5G), the global audio and video industry has ushered in tremendous changes. The business volume of related products such as video conferencing, video Internet of Things, and video middle platforms is growing rapidly, resulting in the increasing demand for performance of storage devices and media. As an object-oriented distributed network storage scheme, object storage is more suitable for data sharing, faster in access and more flexible than block storage and file storage. In large-scale audio and video storage scenarios, an object storage system is faced with the need to process stream data with high concurrency and large traffic, and the transmission link performance of the object storage system has many bottlenecks. For example, the processing of data written to a mount point is slow, the instantaneous batch submission of files have a delay, and a network congests when calling a server side system function, resulting in packet loss, which will affect the quality of data transmission. At the same time, limited by the characteristics of a file system, the transmission performance of a single object storage system also has bottlenecks. Therefore, how to implement the object storage technology that can support high-performance stream data transmission is an urgent problem to be solved at present.

Aiming at the problems of data blockage, low receiving speed and low transmission quality easily caused when the object storage system needs to process code stream data with high concurrency and large traffic, embodiments of the present application provide data transmission methods, a sending server, a receiving server and a storage medium. The sending server acquires a code stream transmission request; determines a first data volume of corresponding code stream data according to the code stream transmission request; in a case that the first data volume is greater than a target transmission threshold, determines a plurality of threads according to the first data volume; and receives the code stream data by means of the plurality of threads, and sends the code stream data to the receiving server. The receiving server receives the code stream data from the sending server, and stores the code stream data. The sending server determines the first data volume of the corresponding code stream data according to the code stream transmission request, which can reduce the situations that due to the excessive data volume of the code stream data, reception of the code stream data is not completed, data blockage occurs and the transmission efficiency is affected. In the case that the first data volume is greater than the target transmission threshold, the plurality of threads are determined according to the first data volume, and the code stream data is received by means of the plurality of threads. By enabling the plurality of threads to receive the code stream data, more code stream data can be received per unit time, which can improve the transmission speed of the code stream data received by the sending server, improve the transmission efficiency, reduce data blockage, and improve user experience.

The embodiments of the present application are further illustrated below in conjunction with the accompanying drawings.

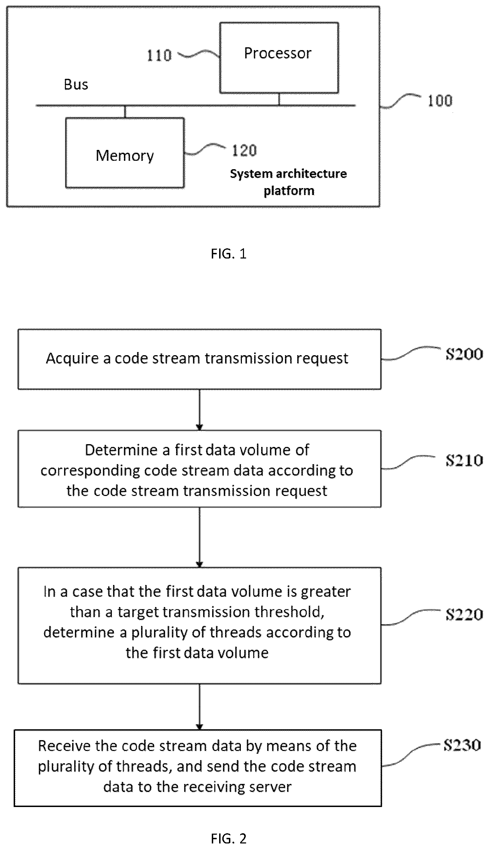

As shown in FIG. 1, FIG. 1 is a schematic diagram of a system architecture platform configured to execute a data transmission method according to an embodiment of the present application.

The system architecture platform 100 of the embodiment of the present application includes one or more processors 110 and one or more memories 120. One processor 110 and one memory 120 are taken as an example in FIG. 1.

The processor 110 and the memory 120 may be connected via a bus or other means. FIG. 1 shows an example of a connection via a bus.

The memory 120 serves as a non-transitory computer readable storage medium that may be configured to store non-transitory software programs and non-transitory computer-executable programs. In addition, the memory 120 may include a high-speed random access memory, and may also include a non-transitory memory, such as at least one disk memory device, a flash memory device, or other non-transitory solid state memory devices. In some implementations, the memory 120 may include memories 120 that are remotely arranged relative to the processor 110, and these remote memories may be connected to the system architecture platform 100 via networks. Examples of the above networks include, but are not limited to, the Internet, corporate Intranets, local area networks, mobile communication networks, and combinations thereof.

A person skilled in the art may appreciate that the apparatus structure shown in FIG. 1 is not to be construed as limiting the system architecture platform 100 and may include more or fewer components than illustrated, or some components may be combined, or a different arrangement of components may be employed.

As shown in FIG. 2, FIG. 2 is a flow diagram of a data transmission method according to an embodiment of the present application. The data transmission method of the embodiment of the present application includes, but is not limited to, step S200, step S210, step S220 and step S230.

At step S200: a code stream transmission request is acquired.

At step S210: a first data volume of corresponding code stream data is determined according to the code stream transmission request.

At step S220: in a case that the first data volume is greater than a target transmission threshold, a plurality of threads are determined according to the first data volume.

At step S230: the code stream data is received by means of the plurality of threads, and the code stream data is sent to a receiving server.

In the present embodiment, the data transmission method is applied to a sending server. The sending server acquires the code stream transmission request; determines the first data volume of the corresponding code stream data according to the code stream transmission request; in the case that the first data volume is greater than the target transmission threshold, determines the plurality of threads according to the first data volume in order to reduce data transmission blockage caused when the code stream data is received; and receives the code stream data by means of the plurality of threads. More code stream data can be received per unit time, which can improve the transmission speed of the code stream data received by the sending server, improve the transmission efficiency, reduce data blockage, and improve user experience. The sending server sends the code stream data to the receiving server.

In addition, in the present embodiment, in a case that the first data volume is less than or equal to the target transmission threshold, the code stream data is received by means of a single thread. The waste of internal resources of the sending server is reduced, and the transmission efficiency is improved.

In addition, in the present embodiment, the data volume of the code stream data received by means of each thread of the plurality of threads is equal, which reduces the situation that some threads are idle and some threads are busy, improves the transmission efficiency, reduces data blockage, and improves the transmission speed of the code stream data received by the sending server.

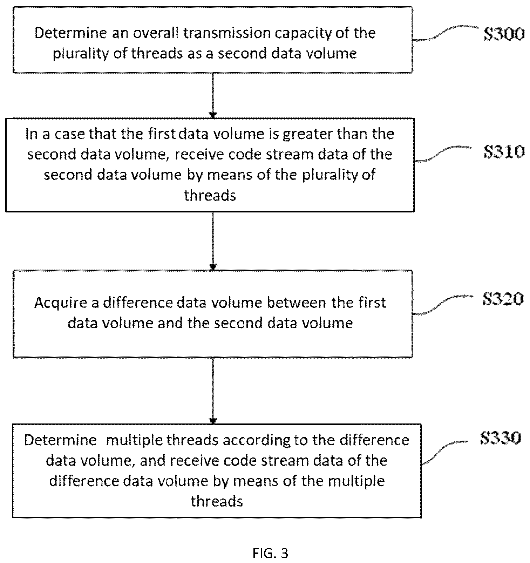

As shown in FIG. 3, FIG. 3 is a flow diagram of a data transmission method according to an embodiment of the present application. The data transmission method of the embodiment of the present application includes, but is not limited to, step S300, step S310, step S320 and step S330.

At step S300: the overall transmission capacity of a plurality of threads is determined as a second data volume.

At step S310: in a case that a first data volume is greater than the second data volume, code stream data of the second data volume is received by means of the plurality of threads.

At step S320: a difference data volume between the first data volume and the second data volume is acquired.

At step S330: multiple threads are determined according to the difference data volume, and code stream data of the difference data volume is received by means of the multiple threads.

In the present embodiment, the data transmission method is applied to a sending server, and the sending server determines the overall transmission capacity of the plurality of threads as the second data volume. In some embodiments, in a case that the quantity of threads is "X" and the data volume received by a single thread is "Y" MB, the overall transmission capacity of the plurality of threads, namely the second data volume, is "X*Y" MB. In the case that the first data volume is greater than the second data volume, the code stream data of the second data volume is received by means of the plurality of threads, the difference data volume between the first data volume and the second data volume is acquired, multiple threads are determined according to the difference data volume, and the code stream data of the difference data volume is received by means of the multiple threads. The transmission speed of the code stream data received by the sending server can be improved, the transmission efficiency can be improved, data blockage can be reduced, and user experience can be improved.

In addition, in the present embodiment, transmission of the code stream data is not to request the code stream data of the first data volume at one time, but to request the code stream data of the second data volume , and then determine the multiple threads for subsequent data receiving and the data volume corresponding to the multiple threads according to the difference data volume between the first data volume and the second data volume. Data blockage is reduced, and user experience is improved.

In addition, in the present embodiment, the data volume of the code stream data received by each thread in the plurality of threads is equal, which reduces the situation that some threads are idle and some threads are busy, improves the transmission efficiency, reduces data blockage, and improves the transmission speed of the code stream data received by the sending server.

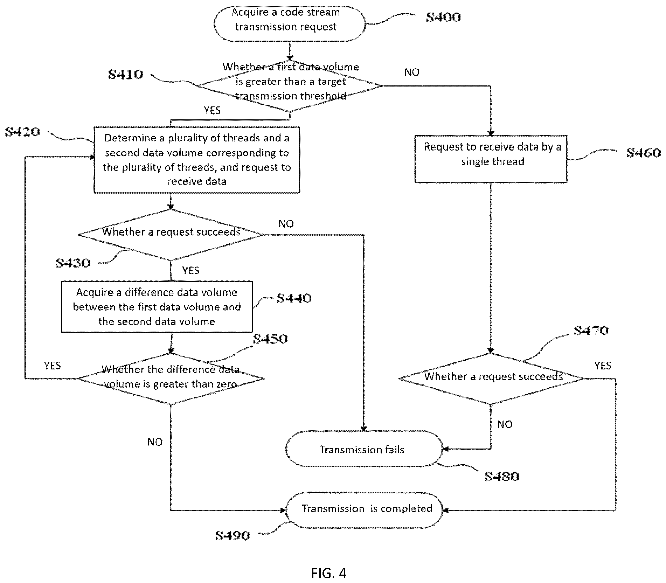

As shown in FIG. 4, FIG. 4 is a flow diagram of a data transmission method according to another embodiment of the present application. The data transmission method of the embodiment of the present application includes, but is not limited to, step S400 to step S490.

At step S400: a code stream transmission request is acquired.

At step S410: whether a first data volume is greater than a target transmission threshold is judged, if yes, step S420 is performed, otherwise, step S460 is performed.

At step S420: a plurality of threads and a second data volume corresponding to the plurality of threads are determined, and data is requested to be received.

At step S430: whether a request succeeds is judged, if yes, step S440 is performed, otherwise, step S480 is performed.

At step S440: a difference data volume between the first data volume and the second data volume is acquired.

At step S450: whether the difference data volume is greater than zero is judged, if yes, step S420 is performed, otherwise, step S490 is performed.

At step S460: data is requested to be received by a single thread, and step S470 is performed.

At step S470: whether a request succeeds is judged, if yes, step S490 is performed, otherwise, step S480 is performed.

At step S480: transmission fails.

At step S490: transmission is completed.

In the present embodiment, the data transmission method is applied to a sending server, and the sending server acquires the code stream transmission request, determines the first data volume of the code stream data according to the code stream transmission request, and judges whether the first data volume is greater than the target transmission threshold.

In a case that the first data volume is greater than the target transmission threshold, the plurality of threads and the second data volume corresponding to the plurality of threads are determined, and the data is requested to be received. Whether the request succeeds is judged, that is, whether the code stream data of the second data volume is received successfully is judged. If no, the transmission of the code stream data of the second data volume fails. If yes, that is, the code stream data of the second data volume is received successfully, the difference data volume between the first data volume and the second data volume is acquired, and whether the difference data volume is greater than zero is judged. If yes, that is, the difference data volume is greater than zero, threads and the second data volume corresponding to the threads are determined again, and the data is requested to be received. If no, that is, the difference data volume is less than or equal to zero, the transmission is completed, that is, the sending server completes the reception of the code stream data of the first data volume.

In a case that the first data volume is less than the target transmission threshold, the data is requested to be received by a single thread, whether the request succeeds is judged, that is, whether the code stream data of the first data volume is received successfully is judged, if yes, the transmission is completed, otherwise, the transmission fails.

In addition, in the present embodiment, the data volume of the code stream data received by each thread in the plurality of threads is equal, which reduces the situation that some threads are idle and some threads are busy, improves the transmission efficiency, reduces data blockage, and improves the transmission speed of the code stream data received by the sending server.

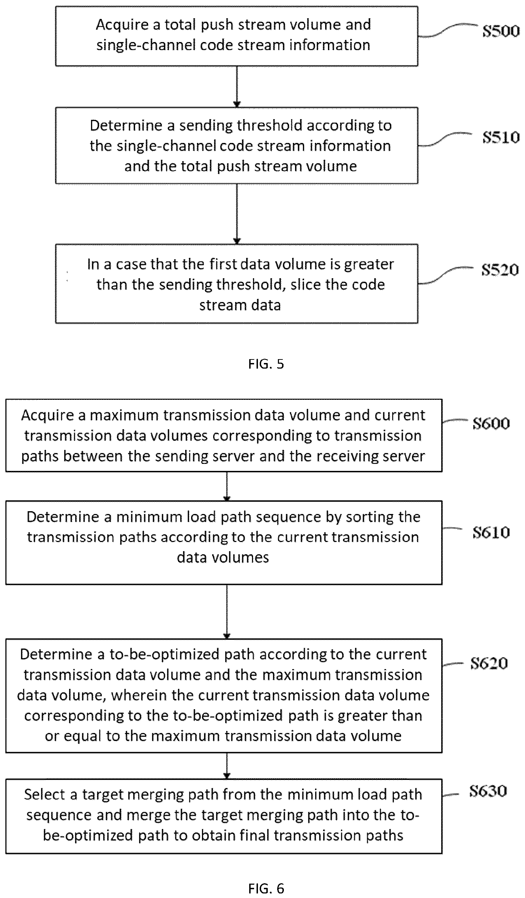

As shown in FIG. 5, FIG. 5 is a flow diagram of a data transmission method according to an embodiment of the present application. The data transmission method of the embodiment of the present application includes, but is not limited to, step S500, step S510 and step S520.

At step S500: a total push stream volume and single-channel code stream information are acquired.

At step S510: a sending threshold is determined according to the single-channel code stream information and the total push stream volume.

At step S520: in a case that a first data volume is greater than the sending threshold, code stream data is sliced.

In the present embodiment, the data transmission method is applied to a sending server. The sending server acquires the total push stream volume and the single-channel code stream information, the sending threshold is determined according to the single-channel code stream information and the total push stream volume, and in the case that the first data volume is greater than the sending threshold, the code stream data is sliced. The data volume of each slice of code stream data is made to be equal to the sending threshold, that is, in the case that the first data volume is greater than the sending threshold, the data volume of a code stream file generated according to the code stream data is also greater than the sending threshold. In a case that the code stream file generated according to the code stream data is greater than or equal to the sending threshold, the code stream file is sent to a receiving server, that is, the code stream data is sliced, such that the code stream data transmission is in smooth transition during high-concurrency transmission, and therefore, internal cache resource usage and memory management are reduced, at the same time, the peak of the unit transmission load of a transmission control protocol (TCP) is reduced, and input/output (IO) is prevented from congestion.

In addition, in the present embodiment, the sending threshold is dynamically adjusted according to the single-channel code stream information and the total push stream volume. In some embodiments, in a case that the size of the single-channel code stream, that is, the single-channel code stream information, is 4 Mb/s, and the total volume, that is, the total push stream volume, is 10 Gbps, the sending threshold may be set to 25 MB. In a case that the data volume of the code stream file generated by the code stream data is greater than or equal to 25 MB, the code stream file is sent to the receiving server.

In addition, in the present embodiment, in a case that the first data volume is less than or equal to the sending threshold, the code stream data is directly sent to the receiving server.

As shown in FIG. 6, FIG. 6 is a flow diagram of a data transmission method according to an embodiment of the present application. The data transmission method of the embodiment of the present application includes, but is not limited to, step S600, step S610, step S620 and step S630.

At step S600: a maximum transmission data volume and current transmission data volumes corresponding to transmission paths between a sending server and a receiving server are acquired.

At step S610: a minimum load path sequence is determined by sorting the transmission paths according to the current transmission data volumes.

At step S620: a to-be-optimized path is determined according to the current transmission data volume and the maximum transmission data volume, where the current transmission data volume corresponding to the to-be-optimized path is greater than or equal to the maximum transmission data volume.

At step S630: a target merging path is selected from the minimum load path sequence and merged into the to-be-optimized path to obtain final transmission paths.

In the present embodiment, the data transmission method is applied to the sending server. The sending server acquires the maximum and current transmission data volumes corresponding to the transmission paths between the sending server and the receiving server, determines the minimum load path sequence by sorting the transmission paths according to the current transmission data volumes, determines the to-be-optimized path according to the current transmission data volume and the maximum transmission data volume, where the current transmission data volume corresponding to the to-be-optimized path is greater than or equal to the maximum transmission data volume, that is, packet loss occurs in transmission of the to-be-optimized path, and selects the target merging path from the minimum load path sequence and merges the target merging path into the to-be-optimized path to obtain the final transmission paths. The target merging path is selected from the minimum load path sequence and merged into the to-be-optimized path, so that the capacity is expanded dynamically and horizontally, the problem of packet loss in the transmission paths is solved timely, data integrity is ensured, and user experience is improved.

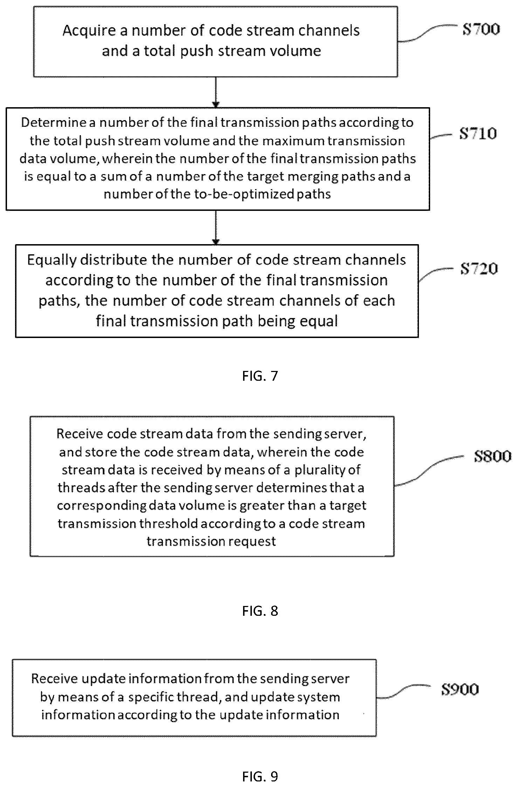

As shown in FIG. 6 and FIG. 7, FIG. 7 is a flow diagram of a data transmission method according to an embodiment of the present application. The data transmission method of the embodiment of the present application includes, but is not limited to, step S700, step S710 and step S720.

At step S700: a number of code stream channels and a total push stream volume are acquired.

At step S710: a number of final transmission paths is determined according to the total push stream volume and a maximum transmission data volume, where the number of the final transmission paths is equal to a sum of a number of target merging paths and a number of to-be-optimized paths.

At step S720: the number of code stream channels is equally distributed according to the number of the final transmission paths, where the number of code stream channels of each final transmission path is equal.

In the present embodiment, the data transmission method is applied to a sending server. The sending server acquires the number of code stream channels and the total push stream volume, determines the number of the final transmission paths according to the total push stream volume and the maximum transmission data volume, where the number of the final transmission paths is equal to the sum of the number of the target merging paths and the number of the to-be-optimized paths, and equally distributes the number of code stream channels according to the number of the final transmission paths, where the number of code stream channels of each final transmission path is equal. The target merging path is selected from the minimum load path sequence and merged into the to-be-optimized path, so that the capacity is expanded dynamically and horizontally, the problem of packet loss in transmission paths is solved timely, data integrity is ensured, and user experience is improved.

In some embodiments, the number of code stream channels is 2500, the total push stream volume is 10 Gbps, the maximum transmission data volume of a single transmission path is 2 Gbps, obviously, the single transmission path cannot completely transmit data to a receiving server, and packet loss will occur midway. The transmission path is marked as the to-be-optimized path, it is determined that the number of the final transmission paths is 5 according to the total push stream volume and the maximum transmission data volume. That is, four target merging paths are selected from the minimum load path sequence and merged into the to-be-optimized path, and the code stream channels are equally distributed to each final transmission path, that is, the number of code stream channels processed by one final transmission path is 500.

As shown in FIG. 8 and FIG. 9, FIG. 8 is a flow diagram of a data transmission method according to an embodiment of the present application. The data transmission method of the embodiment of the present application includes, but is not limited to, step S800. FIG. 9 is a flow diagram of a data transmission method according to an embodiment of the present application. The data transmission method of the embodiment of the present application includes, but is not limited to, step S900.

At step S800: code stream data from a sending server is received, and the code stream data is stored, where the code stream data is received by means of a plurality of threads after the sending server determines, according to a code stream transmission request, that a corresponding data volume is greater than a target transmission threshold.

At step S900: update information from the sending server is received by means of a specific thread, and system information is updated according to the update information.

In the present embodiment, the data transmission method is applied to a receiving server. The receiving server receives the code stream data from the sending server, and stores the code stream data, where the code stream data is received by means of the plurality of threads after the sending server determines, according to the code stream transmission request, that the corresponding data volume is greater than the target transmission threshold. The receiving server receives the update information from the sending server by means of the specific thread, and updates the system information according to the update information. The specific thread is used to update the system information of the receiving server, such as path, file size, time, etc., to reduce system function calls from blocking worker threads. At the same time, system call functions are prohibited and reduced, such as finding file path functions, taking time functions, etc., so as to reduce network congestion, improve transmission efficiency, and thus improve user experience.

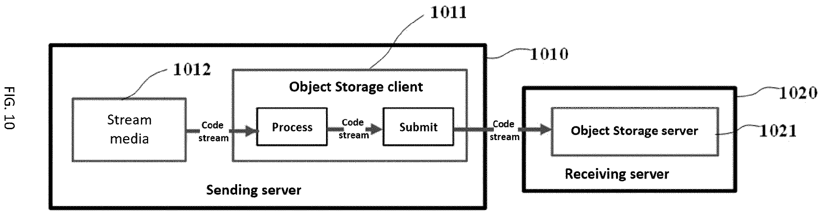

As shown in FIG. 10, FIG. 10 is a schematic structural diagram of a code stream data transmission model according to another embodiment of the present application. In the present embodiment, the code stream data transmission model is provided with a sending server 1010 and a receiving server 1020. The sending server 1010 and the receiving server 1020 may be physical machines, or virtual machines, or Docker (Application Container Engine) containerized environments. Stream media 1012 and an object storage client 1011 are provided in the sending server 1010. An object storage server 1021 is provided in the receiving server 1020. The stream media 1012 is a code stream data generation source or transfer source. It is responsible for writing code stream data of various protocols to a mount point of the object storage client 1011, which is a near-end file system mount point. The code stream data responsible for writing the stream media 1012 to the mount point is sent to the object storage server 1021 by means of a network, and the object storage server 1021 is a remote-end data storage point. The code stream data transmitted by the object storage client 1011 over the network is stored persistently and can be accessed by any near-end object storage client 1011, that is, data sharing is implemented.

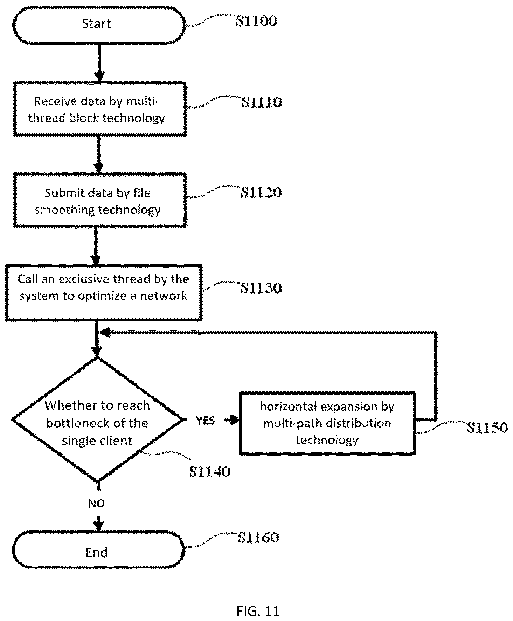

As shown in FIG. 10 and FIG. 11, FIG. 11 is a flow diagram of a data transmission method according to another embodiment of the present application. The data transmission method of the embodiment of the present application includes, but is not limited to, step S1100 to step S1160.

At step S1100: start.

At step S1110: data is received by a multi-thread block technology.

At step S1120: data is submitted by a file smoothing technology.

At step S1130: a system calls an exclusive thread to optimize a network.

At step S1140: whether the bottleneck of a single client is reached is judged, if yes, step S1150 is performed; otherwise step S1160 is performed.

At step S1150: horizontal expansion is performed by a multi-path distribution technology.

At step S1160: end.

In the present embodiment, the data transmission method is applied to the code stream data model as shown in FIG. 10. The stream media 1012 generates or transits the code stream data, a data receiving module in the object storage client 1011 in the sending server 1010 adopts the multi-thread block technology to receive the code stream data from the stream media 1012, and the multi-thread block technology is the data transmission method shown in the embodiments in FIG. 2 to FIG. 4, which improves transmission efficiency, reduces data blockage, and improves user experience. A data submission module in the object storage client 1011 adopts the file smoothing technology to submit data. The file smoothing technology is the data transmission method shown in the embodiment of FIG. 5, which enables the smooth transition of code stream data transmission in the case of high-concurrency transmission, thus reducing the use of internal cache resources and memory management. At the same time, the peak of the unit transmission load of the TCP is reduced, and IO is prevented from congestion. The code stream data model uses the exclusive thread to update the system information of the object storage server, such as path, file size, time, etc., to optimize the network and reduce system function calls from blocking worker threads. At the same time, system call functions are prohibited and reduced, such as finding file path functions, taking time functions, etc., so as to reduce network congestion, and improve transmission efficiency. The code stream data model determines the quality of a transmission channel of a single object storage client, that is, the transmission path between the sending server 1010 and the receiving server 1020. In a case that the data volume of the transmitted code stream data does not reach the upper limit, that is, no packet loss occurs in the transmission path, transmission continues. In a case that the data volume of the transmitted code stream data reaches the upper limit, that is, packet loss occurs in the transmission path, the multi-path distribution technology is adopted for horizontal expansion. The multi-path distribution technology is the data transmission method shown in the embodiments in FIG. 6 to FIG. 7, which is conducive to rapid dynamic horizontal expansion, timely handling of packet loss in the transmission path, ensuring data integrity, and improving user experience.

In addition, an embodiment of the present application provides a sending server. The sending server includes a processor, a memory and a computer program stored on the memory and capable of running on the processor.

The processor and the memory may be connected via a bus or other means.

It should be noted that the sending server in the present embodiment may include the processor and the memory in the embodiment shown in FIG. 1, both of which belong to the same idea, so as to have the same implementation principle and beneficial effects, which will not be detailed here.

Non-transitory software programs and instructions required to implement the data transmission method of the above embodiment are stored in the memory, and when executed by the processor, execute the data transmission method of the above embodiment.

It should be noted that since the sending server of the embodiment of the present application can execute the data transmission method of the above embodiment, the implementations and technical effects of the sending server of the embodiment of the present application may refer to the implementations and technical effects of the data transmission method of any one of the above embodiments.

In addition, an embodiment of the present application provides a receiving server, including: a processor, a memory and a computer program stored on the memory and capable of running on the processor.

The processor and the memory may be connected via a bus or other means.

It should be noted that the receiving server in the present embodiment may include the processor and the memory in the embodiment shown in FIG. 1, both of which belong to the same idea, so as to have the same implementation principle and beneficial effects, which will not be detailed here.

Non-transitory software programs and instructions required to implement the data transmission method of the above embodiment are stored in the memory, and when executed by the processor, execute the data transmission method of the above embodiment.

It should be noted that since the receiving server of the embodiment of the present application can execute the data transmission method of the above embodiment, the implementations and technical effects of the receiving server of the embodiment of the present application may refer to the implementations and technical effects of the data transmission method of any one of the above embodiments.

In addition, an embodiment of the present application further provides a computer readable storage medium. The computer readable storage medium stores computer-executable instructions that are executed by one processor or controller, for example, by one processor in the above network device embodiment and/or terminal device embodiment, which can cause the above processor to execute the data transmission method of any one of the above embodiments, for example, execute the above-described method steps S200 to S230 in FIG. 2, method steps S300 to S330 in FIG. 3, method steps S400 to S490 in FIG. 4, method steps S500 to S520 in FIG. 5, method steps S600 to S630 in FIG. 6, method steps S700 to S720 in FIG. 7, method step S800 in FIG. 8, method step S900 in FIG. 9, and method steps S1100 to S1160 in FIG. 11.

The embodiment of the present application includes: a sending server acquires a code stream transmission request; a first data volume of corresponding code stream data is determined according to the code stream transmission request; in a case that the first data volume is greater than a target transmission threshold, a plurality of threads are determined according to the first data volume; and the code stream data is received by means of the plurality of threads, and the code stream data is sent to a receiving server. The receiving server receives the code stream data from the sending server, and stores the code stream data. The sending server determines the first data volume of the corresponding code stream data according to the code stream transmission request, which can reduce situations that due to the excessive data volume of the code stream data, reception of the code stream data is not completed, data blockage occurs and the transmission efficiency is affected. In the case that the first data volume is greater than the target transmission threshold, the plurality of threads are determined according to the first data volume, and the code stream data is received by means of the plurality of threads. By enabling the plurality of threads to receive the code stream data, more code stream data can be received per unit time, which can improve the transmission speed of the code stream data received by the sending server, improve the transmission efficiency, reduce data blockage, and improve user experience.

It is understood by those of ordinary skill in the art that all or some of the steps and systems in the methods disclosed above may be implemented as software, firmware, hardware, and appropriate combinations thereof. Some or all physical components may be implemented as software executed by a processor, such as a central processor, a digital signal processor, or a microprocessor, or as hardware, or as integrated circuits, such as application-specific integrated circuits. Such software may be distributed on a computer readable medium, which may include a computer storage medium (or non-transient medium) and a communication medium (or transient medium). As is well known to those of ordinary skill in the art, the term of the computer storage medium includes volatile and nonvolatile, removable and non-removable media implemented in any method or technology for storage of information (such as computer-readable instructions, data structures, program modules or other data). The computer storage medium includes, but is not limited to, an RAM, an ROM, an EEPROM, flash memory or other memory technologies, a CD-ROM, a digital video disk (DVD) or other optical disk storage, magnetic cartridge, magnetic tape, disk storage or other magnetic storage devices, or any other media that can be used to store desired information and can be accessed by a computer. In addition, it is well known to those of ordinary skill in the art that the communication medium usually includes computer-readable instructions, data structures, program modules, or other data in a modulated data signal such as a carrier or other transmission mechanisms, and may include any information delivery medium.

## Claims

1. A data transmission method, applied to a sending server, the sending server communicating with a receiving server; and the method comprising:
acquiring a code stream transmission request;
determining, according to the code stream transmission request, a first data volume of corresponding code stream data;
determining, in a case that the first data volume is greater than a target transmission threshold, a plurality of threads according to the first data volume; and
receiving the code stream data by means of the plurality of threads, and sending the code stream data to the receiving server.

2. The data transmission method according to claim 1, wherein the method further comprising:
receiving, in a case that the first data volume is less than or equal to the target transmission threshold, the code stream data by means of a single thread.

3. The data transmission method according to claim 1, wherein receiving the code stream data by means of the plurality of threads comprises:
determining an overall transmission capacity of the plurality of threads as a second data volume;
receiving, in a case that the first data volume is greater than the second data volume, code stream data of the second data volume by means of the plurality of threads;
acquiring a difference data volume between the first data volume and the second data volume; and
determining multiple threads according to the difference data volume, and receiving code stream data of the difference data volume by means of the multiple threads.

4. The data transmission method according to claim 1, wherein a data volume of the code stream data received by means of each thread of the plurality of threads is equal.

5. The data transmission method according to claim 1, wherein prior to sending the code stream data to the receiving server, the method comprises:
acquiring a total push stream volume and single-channel code stream information;
determining, according to the single-channel code stream information and the total push stream volume, a sending threshold; and
slicing, in a case that the first data volume is greater than the sending threshold, the code stream data.

6. The data transmission method according to claim 1, wherein the method further comprising:
acquiring a maximum transmission data volume corresponding to transmission paths between the sending server and the receiving server, and current transmission data volumes corresponding to the transmission paths ;
determining a minimum load path sequence by sorting the transmission paths according to the current transmission data volumes;
determining, according to the current transmission data volume and the maximum transmission data volume, a to-be-optimized path, wherein the current transmission data volume corresponding to the to-be-optimized path is greater than or equal to the maximum transmission data volume; and
selecting a target merging path from the minimum load path sequence and merging the target merging path into the to-be-optimized path to obtain final transmission paths.

7. The data transmission method according to claim 6, wherein selecting the target merging path from the minimum load path sequence and merging the target merging path into the to-be-optimized path to obtain the final transmission paths comprises:
acquiring a number of code stream channels and a total push stream volume;
determining, according to the total push stream volume and the maximum transmission data volume, a number of the final transmission paths, wherein the number of the final transmission paths is equal to a sum of a number of the target merging paths and a number of the to-be-optimized paths; and
equally distributing the number of code stream channels according to the number of the final transmission paths, the number of code stream channels of each final transmission path being equal.

8. A data transmission method, applied to a receiving server, the receiving server communicating with a sending server; and the method comprising:
receiving code stream data from the sending server, and storing the code stream data, wherein the code stream data is received by means of a plurality of threads after the sending server determines, according to a code stream transmission request, that a corresponding data volume is greater than a target transmission threshold.

9. The data transmission method according to claim 8, wherein the method further comprising:
receiving update information from the sending server by means of a specific thread, and updating system information according to the update information.

10. A sending server, comprising: a memory, a processor, and a computer program stored on the memory and is capable of running on the processor, wherein the processor, when running the computer program, executes the data transmission method according to any one of claims 1 to 7.

11. A receiving server, comprising: a memory, a processor, and a computer program that is stored on the memory and is capable of running on the processor, wherein the processor, when running the computer program, executes the data transmission method according to any one of claims 8 to 9.

12. A computer readable storage medium, storing computer-executable instructions, wherein the computer-executable instructions are used to enable a computer to execute the data transmission method according to any one of claims 1 to 9.
